# EUROPÄISCHE PATENTSCHRIFT

(11) **EP 2 104 719 B1**
(45) Veröffentlichungstag und Bekanntmachung des Hinweises auf die Patenterteilung: **20.02.2013**
(21) Anmeldenummer: 07847965.6
(22) Anmeldetag: 07.12.2007
(51) Int. Cl.: C09J 7/00, C09J 7/02

(54) **KLEBSCHICHT FÜR EINE BLASENFREIE VERKLEBUNG**
ADHESIVE LATER FOR A BUBBLE-FREE ADHESIVE BOND
COUCHE ADHÉSIVE POUR COLLAGE SANS BULLES

(30) Priorität: 22.12.2006 DE 102006062247
(43) Veröffentlichungstag der Anmeldung: 30.09.2009
(73) Patentinhaber: TESA SE, 20253 Hamburg (DE)
(72) Erfinder: KLEINHOFF, Klaus, 31552 Rodenberg (DE); NAGEL, Christoph, 22417 Hamburg (DE)
(86) Internationale Anmeldenummer: PCT/EP2007/063501
(87) Internationale Veröffentlichungsnummer: WO 2008/077743

(56) Entgegenhaltungen:
- EP-A- 1 672 043
- WO-A-96/14366
- WO-A-03/095576
- US-A1- 2004 241 417
- DATABASE WPI Week 198611 Derwent Publications Ltd., London, GB; AN 1986-073499 XP002472804 & JP 61 024436 A (SHOWA ALUMINIUM CO LTD) 3. Februar 1986 (1986-02-03)

## Beschreibung

Die Erfindung betrifft
- eine Klebschicht für eine blasenfreie Verklebung mit mindestens einem oberflächlich in der Klebmasse, aus der die Klebschicht gebildet ist, eingebrachtem Kanal,
- ein Flächengebilde für eine blasenfreie Verklebung sowie
- ein Verfahren zur Herstellung des Flächengebildes für eine blasenfreie Verklebung.

Der Begriff "Flächengebilde" schließt im Rahmen dieser Anmeldung "Bänder" ein, also solche Gegenstände, deren Längserstreckung wesentlich länger ist als deren Breitenerstreckung. Ausgerüstet mit einer Selbstklebemasse werden solche Bänder üblicherweise als "Klebebänder" bezeichnet. Der Begriff "Flächengebilde" schließt aber auch solche Gebilde ein, deren Breite in der Größenordnung der Länge liegt, sei es, weil es sich um Stanzlinge handelt, die fertig gestanzt mit den unterschiedlichsten Umrissen in Verkehr gebracht werden, sei es, weil es sich um Zuschnitte aus wesentlich größeren in Verkehr gebrachten Ballen oder Rollen handelt, die sich der Anwender selber zuschneidet. "Flächengebilde" soll also nur zum Ausdruck bringen, dass seine Dicke gering ist im Verhältnis zu seiner Breite und Länge.

Ein Beispiel solcher Flächengebilde als Stanzlinge sind die Folienstücke, die heutzutage häufig zur Erzielung einer gestreckteren Anmutung an den B-Säulen von PKW-Karosserien eingesetzt werden. In Schwarz oder Dunkelgrau heben sie zumindest aus der Entfernung betrachtet die Grenze zwischen der Fensterfläche der vorderen Tür und dem in Fahrtrichtung dahinter befindlichen Fenster auf, sofern sie sich wirklich perfekt der B-Säulenkontur anschmiegen, was neben einer genauen Stanzkontur und einem passgenauen Aufkleben auch erfordert, dass die Oberfläche sich beulenfrei darstellt, wozu die Verklebung blasenfrei gelingen muss.

Auch bei vielen anderen Anwendungen gelangen klebende Flächengebilde wie etwa Klebefolien oder -bänder zum Einsatz, die auf einem Substrat aufgebracht werden, um diesen mit anderen Elementen klebend zu verbinden, um diesen zu schützen oder zu dekorativen Zwecken. Solche Klebeartikel weisen an einer Seite oder an beiden Seiten eine Klebschicht aus einer Klebmasse auf, mittels derer ein Anhaften des Klebeartikels auf dem Substrat erreicht werden soll.

Beim Verkleben der Klebeartikel kommt es jedoch häufig dazu, dass an der Klebfläche, d. h. an der Fläche der Verklebung zwischen der Klebmasse einerseits und dem Substrat andererseits, ein Fluid, wie zum Beispiel Luft, eingeschlossen wird und dort als Blase verbleibt. Dies tritt insbesondere dann auf, wenn der Klebkontakt zwischen dem Klebeartikel und dem Substrat nicht von zunächst einem einzigen Punkt oder einer ringschlussfreien Linie ausgehend über die gesamte Klebfläche hergestellt wird. Vielmehr kommt es vor, dass sich bei der Verklebung ein geschlossener Kurvenzug bildet, auf dem eine zusammenhängende Klebfläche entstanden ist, während im Inneren dieses Kurvenzugs noch kein vollflächiger Klebkontakt entstanden ist. Die im Inneren dieses Kurvenzugs befindliche Luft oder ein sonstiges Fluid oder Fluidgemisch hat keine Möglichkeit zu entweichen und ist dort eingeschlossen.

Eine solche Blasenbildung tritt umso häufiger auf, je größer die Klebfläche ist. Die Klebbereiche, die außerhalb des geschlossenen Kurvenzugs liegen, lassen sich häufig noch blasenfrei mit dem Substrat verkleben. Das im Inneren des geschlossenen Kurvenzugs befindliche Fluid ist dort jedoch eingeschlossen und kann zumeist auch nicht senkrecht zur Klebfläche abgeführt werden, da üblicherweise weder die zu verklebenden Substrate noch die Trägermaterialien des Klebeartikels Luft durchlassen.

Derartige Fluideinschlüsse oder Fluidblasen sind bei den meisten Verklebungen unerwünscht. Besonders wesentlich ist eine blasenfreie, d. h. vollflächige Verbindung bei solchen Verklebungen, von denen eine technisch einheitliche Höhe verlangt wird (etwa beim Fixieren von Klischees in der Druckindustrie) oder bei denen die visuelle Qualität der Verklebung von Bedeutung ist (etwa bei Schutzfolien auf optischen Geräten oder bei dekorativen Abdeckungen aus Klebefolien).

Aufgrund der Anforderungen an die Geometrie und das Trägermaterial der Klebeartikel ist es in einigen Fällen schwierig, ein blasenfreies Verkleben bereits beim Ausbilden der Verklebung selbst zu gewährleisten. Demzufolge ist es sinnvoll, eine Fluidblase noch in einer Nachbehandlung der Verklebung entfernen zu können. Die häufigste Maßnahme zur Nachbehandlung ist das "Ausstreichen" der Fluidblase aus der Klebfläche; hierbei wird der Fluideinschluss durch Ausüben eines Druckes auf die Fluidblase zum Rand der Klebfläche hin bewegt. Dazu muss der bereits um die Blase herum ausgebildete Klebkontakt bereichsweise wieder gelöst werden, was nur bei schwachen Verklebungen gelingt. Ferner muss eine relativ große Kraft aufgewendet werden, um die Fluidblase unter der flächigen Verklebungsfläche zum Rand zu transportieren. Für den gesamten Transport ist also ein "gewaltsames Ausstreichen" erforderlich, um den Widerstand zu überwinden, den die bereits verklebte Klebfläche der Fluidblase beim Ausstreichen entgegenbringt. Dabei wird bisweilen das Substrats oder der Klebeartikel beschädigt.

Aus der EP 0 951 518 B1 sind blasenfrei verklebende Artikel bekannt, bei denen die Klebmasse permanent durchgängige Kanäle mit geringer Querschnittsfläche aufweist.

Die US 2004/241417 A1 beschreibt expandierte druckempfindliche Klebeschichten, die an der Obergläche mit Kanälen verschen sein können.

Als "blasenfrei verklebend" werden hier solche Klebeartikel bezeichnet, die auf das Substrat aufgebracht werden und mit diesem Verkleben, wobei die Verklebung ohne Nachbehandlung oder allenfalls nach einer einfachen Nachbehandlung keine in der Klebfläche eingeschlossenen Fluidblasen aufweist.

Da die durchgängigen Kanäle an der späteren Klebfläche liegen sollen, sind sie üblicherweise an derjenigen Seite der Klebmasse angeordnet, die zur Verklebung mit dem Substrat in Kontakt gebracht wird, also oberflächlich in der Klebmasse eingebracht. Die Kanäle ermöglichen es, das an der Klebfläche eingeschlossene Fluid zum Rand der Klebefläche hin zu leiten, ohne dass es bei dem Transport durch die Kanäle erforderlich ist, eine bereits erfolgte Verbindung des Klebeartikels mit dem Substrat lokal zu lösen. Der Transport durch die durchgängigen Kanäle ist demnach ein "sanftes Ausstreichen" mit nur geringem Druck, also ein druckarmes oder sogar quasi-druckfreies Ausstreichen. Wegen dieser Erleichterung ergibt sich die blasenentfernende Wirkung des Ausstreichens in der Regel schon ohne eigenständigen Arbeitsschritt bei dem Aufbringen des klebenden flächigen Gebildes selbst.

Die Erleichterung des Ausstreichens beruht in an sich bekannter Weise darauf, dass der größte Teil der Wegstrecke, die das Fluid entlang der Klebfläche zurücklegen muss, praktisch widerstandsfrei überwunden wird; ein gewaltsames Ausstreichen, bei dem eine bereits entstandene Verklebung gelöst und wieder eingegangen wird, ist lediglich noch für die kurze Wegstrecke erforderlich, die eine Fluidblase noch bis zum nächstgelegenen Kanal zurücklegen muss. Da diese Wegstrecke in der Regel deutlich kürzer ist als die Wegstrecke beim vollständigen gewaltsamen Ausstreichen, ist es möglich, eine bei der Verklebung auftretende Fluidblase unter Ausübung eines insgesamt geringeren Drucks und vor allem geringerer Arbeit zu entfernen.

Nachteilig an derartigen Systemen ist, dass die eingesetzten Klebmassen hinreichend formbeständig sein müssen, da die Kanäle jedenfalls kurz nach dem Verkleben des Klebeartikels auf dem Substrat noch durchgängig sein müssen. Es können somit lediglich "harte" Klebmassen zum Einsatz kommen, also hoch kohäsive Klebmassen mit nur geringen viskosen Anteilen, da sonst die Gefahr besteht, dass die Kanäle infolge eines viskosen Flusses - etwa beim Andrücken des Klebeartikels auf das Substrat - permanent verschlossen werden und einem Transport der Fluidblasen zum Rand des Artikels hin nicht mehr zur Verfügung stehen. Derartige harte Klebmassen weisen aber häufig eine geringe Adhäsion und Anfassklebrigkeit auf, weshalb sie - den Monteurjob erschwerend - einen relativ hohen und lang anhaltenden Anpressdruck zur Herstellung der Klebeverbindung erfordern und/oder eine Vorheizung des zu beklebenden Substrates.

Ferner muss bei derartigen Systemen die Tiefe der Kanäle begrenzt werden, weil anders nicht der Kundenwunsch erfüllt werden kann, dass auf der der Klebeschicht gegenüber liegenden Seite des verklebten Flächengebildes die Entlüftungskanäle nicht "durchschlagen", vielmehr sollen sie auf der Rückseite unsichtbar sein. So spricht die bereits genannte EP 0 951 518 B1 von einer Limitierung auf 45 µm.

**Aufgabe** der Erfindung ist es, eine Klebschicht für eine blasenfreie Verklebung anzugeben, die eine höhere Klebrigkeit und somit leichtere Montierbarkeit aufweist. Damit einher geht die Aufgabe, ein Flächengebilde für eine blasenfreie Verklebung sowie ein Verfahren zur Herstellung des Flächengebildes bereit zu stellen.

Die vorliegende Aufgabe wird bei einer Klebschicht für eine blasenfreie Verklebung mit den Merkmalen des Oberbegriffs von Patentanspruch 1 durch die Merkmale des kennzeichnenden Teils von Anspruch 1 gelöst. Nebengeordnete Lösungen stellen das Flächengebilde gemäß Anspruch 10 sowie ein Verfahren zur Herstellung des Flächengebildes gemäß Anspruch 12 dar. Bevorzugte Ausgestaltungen und Weiterbildungen sind Gegenstand der jeweiligen Unteransprüche.

Erfindungsgemäß ist eine Klebschicht für eine blasenfreie Verklebung vorgesehen, bei der in der expandierten Haftklebemasse mindestens ein Kanal oberflächlich in die Klebmasse eingebracht is, wobei alle Kanäle eine Tiefe gröβer als 45 µm aufweisen. Die "oberflächliche" Einbringung des Kanals bedeutet, dass dieser an der Seite der Klebmasse angeordnet ist, die zur Verklebung mit dem Substrat in Kontakt kommt. Zudem ist der Kanal zu dem Substrat hin offen, um das Ausstreichen einer bei der Verklebung auftretenden Fluidblase zu ermöglichen.

Um gegenüber den bisherigen Lösungsvorschlägen eine größere Kanaltiefe zu ermöglichen ohne dafür die Menge (hier im Sinne des physikalischen Begriffes "Masse" gemeint) der aufzubringen Klebmasse zu erhöhen, ist erfindungsgemäß vorgesehen, dass die Klebmasse expandiert ist. Die Expansion der Klebmasse kann auf verschiedenste Weise herbeigeführt werden, z. B. durch Einblasung eines Gases oder Gasgemisches, welches nicht mit der Klebmasse nachteilig reagiert, z. B. durch Einblasung von Kohlendioxid, vorzugsweise aber durch das Einbringen so genannter Mikroballons, die sich im Wesentlichen erst nach einem Verarbeitungsschritt, z. B. Erwärmung, äufblähen.

Die Expansion durch Mikroballons verleiht dem Gemisch aus Klebmasse und Mikroballons makroskopisch -also gemittelt über einen Raum dessen Kantenerstreckung deutlich größer ist als der Durchmesser eines Mikroballons- eine höhere Kohäsivität als es die Klebmasse alleine hat.

Zwar ändert die Erfindung nichts an dem grundsätzlichen Verhalten jeder permanentklebrigen Klebmasse, dass sie nämlich eine gewisse Fließwilligkeit hat, welche insofern störend sein könnte, als mehr oder weniger allmählich die Kanäle "zusammenfließen", also ihre Fähigkeit verlieren, Fluide abführen zu können, aber durch die vergrößerte Kanaltiefe, vorzugsweise 50 bis 100 µm, besonders bevorzugt 60 bis 80 µm, muss die Klebmasse bis zur Verstopfung der Kanäle größere Fließwege zurücklegen, was dementsprechend länger dauert. Es reicht aus, wenn die Fließzeit bis zur Verstopfung der Kanäle länger ist als die übliche Applikationszeit, also die Zeit vom Entfernen des die Klebmassenstruktur konservierenden strukturierten Liners bis zum Vollenden des Aufbringens - und ggf. erforderlichen Fluidausstreichens - des Klebegutes auf das Substrat.

Wenn, wie bevorzugt, die Klebmassenexpansion durch Mikroballons erfolgt, tritt neben die Wirkung der Fließwegverlängerung noch zusätzlich die fließdrosselnde Wirkung der Mikroballons.

Der Begriff "Klebmasse" im Sinne des Anspruches 1 kann sowohl im engeren Sinne gelesen werden auf die Klebmasse selber - also das Gemisch aus Polymeren und ggf. Harzen neben an sich bekannten Alterungsschutzmitteln und weiteren an sich bekannten Zusätzen, Farben etc. - als auch im weiteren Sinne auf das Gemisch dieser Klebmasse mit Mikroballons.

Weil eine so große Vergrößerung der höchstzulässigen Applikationszeit für eine befriedigende Fluidabfuhr, wie sie die Erfindung ermöglicht, bei den meisten Anwendungen, insbesondere den relativ kleinen Klebfolien-Stanzlingen zum "Verschwindenlassen" der B-Pfosten bei vielen gängigen PKW-Karosserie-Designs (beim Skoda-Roomster ist es übrigens stattdessen der A-Pfosten), nicht erforderlich ist, kann eine an sich fließwilligere Klebmassenmischung eingesetzt werden; dadurch lässt sich eine höhere Adhäsion und Anfassklebrigkeit einstellen, was dem Monteur die Applikation erfindungsgemäßer Produkte erleichtert.

Als Ausgangsstoff für die expandierte Klebmasse können beliebige übliche Klebmassen verwendet werden. Solche Klebmassen enthalten üblicherweise zumindest eine adhäsionsfördernde Komponente, die Bestandteile aufweisen kann wie Klebharze und struktursteuernde Bestandteile wie Weichmacher, Vernetzer oder Vernetzerhilfsmittel. Die Klebmasse kann ferner Zusatzstoffe, wie Färbemittel, Füllmittel oder dergleichen enthalten. Erfindungsgemäß gelangen druckempfindliche Selbstklebmassen zum Einsatz, bei denen eine Verklebung mit dem Substrat in der Regel bereits durch Ausüben eines leichten Drucks auf die Klebmasse (beziehungsweise deren Träger) erzielt wird.

Derartige druckempfindliche Selbstklebmassen, die unmittelbar nachdem sie mit einem Substrat in Kontakt gebracht werden, eine Verbindung mit diesem eingehen, werden auch als "Haftklebmassen" (englisch: "pressure sensitive adhesives") bezeichnet. Eine druckempfindliche Selbstklebmasse kann aus einer Lösung oder einer Dispersions hergestellt sein.

Als Selbstklebemasse oder Klebmasse werden solche bevorzugt, die auf Polyacrylaten, Natur- , Sythesekautschuken und/oder Polyurethanen oder sonstigen thermoplastischen oder nicht-thermoplastischen Elastomeren basieren.

Wie schon erwähnt, kann die Expansion der Klebmasse auf verschiedene Weise erzielt werden, beispielsweise durch Aufschäumung. Eine Variante der Aufschäumung besteht darin, dass Blähgas, insbesondere Kohlendioxid, in die Klebmasse eingeleitet wird. Das Blähgas bildet dann in der Klebmasse Poren aus, die zu der gewünschten Expansion der Klebmasse führen. Alternativ zur Einleitung eines Blähgases kann die Klebmasse Substanzen enthalten, die Blähgase in die Klebmasse abgeben und so zur Porenbildung und Expansion führen. Die Abgabe der Blähgase kann unmittelbar nach dem Einmischen dieser Substanzen in die Klebmasse oder aber nach einem Auslöseschritt, wie einer Temperaturerhöhung erfolgen.

Die Expansion der Klebmasse kann aber auch durch eine chemische Reaktion, bei der es zu einer Volumenvergrößerung kommt, erzielt werden. Die Expansion kann dabei bereits durch das Einmischen entsprechender Substanzen in die Klebmasse oder aber durch einen späteren Auslöseschritt ausgelöst werden. Ferner kann die Expansion der Klebmasse durch eine Kombination verschiedener, insbesondere der zuvor beschriebenen Möglichkeiten der Expansion, erzielt werden.

Besonders bevorzugt wird die Expansion der Klebmasse aber dadurch erzielt, dass Mikroballons in die Klebmasse eingemischt werden, die nach einem entsprechenden Auslöseschritt eine Volumenvergrößerung erfahren. Mikroballons sind zunächst kleine Ballons, die eine mit einer expandierbaren Substanz gefüllte Hülle aufweisen. Durch einen Auslöseschritt, wie eine Temperaturerhöhung, wird die Hülle erweicht und der Balloninnendruck erhöht, woraufhin die in der Hülle befindliche Substanz die Hülle ausdehnt. Dadurch kommt es zu der gewünschten Volumenvergrößerung.

Als Mikroballons werden üblicherweise winzige Ballone aus einer thermoplastischen Polymerhülle verwendet, die mit einer Substanz, wie zum Beispiel Isobutan in ihrer inneren Kaverne gefüllt sind.

Eine mikroballongefüllte Klebschicht zeigt die Eigenschaft, dass das unerwünschte Zusammenfließen der Kanäle reduziert ist. Das Einmischen von Mikroballons in Klebmassen ist ausführlich in der DE 10 2004 037 910 A1 beschrieben, deren Offenbarungsgehalt hiermit inkorporiert wird und dadurch zum Gegenstand der vorliegenden Patentanmeldung gemacht wird.

Wie in der deutschen Fachsprache üblich, wird in dieser Anmeldung überwiegend von "Klebmasse" gesprochen, obwohl begriffssystematisch "Klebstoff" insofern günstiger wäre, als so Verwechsellungen mit dem Begriff "Masse" aus der Physik leichter zu vermeiden wären. Dieses Problem mit der gewachsenen Sprache, das auch schon einmal auf Seite 5, Zeilen 11 - 14 dieser Anmeldung anklang, wird in Sätzen, wo ansonsten sowohl "Masse" als auch "Klebmasse" erscheinen würde dadurch verringert, dass anstelle von "Masse" von "Menge" geschrieben ist (ohne damit etwas anderes zu meinen) oder, wie im nachfolgenden Satze, von "Klebstoff" anstelle von "Klebmasse" (auch hier ohne damit etwas anderes zu meinen).

Um die Masse des aufgetragenen Klebstoffes möglichst gering zu halten, soll der Klebstoff derart expandiert sein, dass das spezifische Gewicht des expandierten Klebstoffes höchstens etwa 70% des Gewichts einer Schicht gleicher Dicke aus einem nicht expandierten Klebstoff beträgt. Umgekehrt ausgedrückt: Bei Auftrag eines nicht expandierten Klebstoffes in gleicher Schichtdicke wäre die Masse des Klebstoffauftrags um knapp 43 % höher.

In bevorzugter Ausgestaltung liegt das spezifische Gewicht der expandierten Klebmasse unter etwa 50 %, ganz bevorzugt zwischen etwa 35 % und etwa 15 % des Gewichts einer nicht expandierten Klebmasse gleicher Dicke. Eine so weit gehende Expansion ermöglicht neben vergrößerter Kanaltiefe und/oder stärker adhäsiv eingestellter eingestellter Klebmasse zudem sogar eine Massenreduktion trotz erhöhter Kanaltiefe.

Die Ausbildung der Kanäle erfolgt vorzugsweise durch Einprägung in die Klebmasse, beispielsweise mittels eines strukturierten Liners. Eine alternative Möglichkeit der Ausbildung der Kanäle in der Klebmasse besteht darin, diesen durch einen lokalen Energieeintrag wie eine Laserbestrahlung einzubringen. Aber auch dann sollte in der Regel ein Liner mit solcher Strukturierung auf das Klebeband mit den frisch erzeugten Kanälen aufgelegt werden, die zumindest in etwa komplementär zur Klebmassenoberfläche ist, um so die Strukturierung für eine lange Lagerung zu konservieren; von dieser Regel kann abgewichen werden, wenn die Kanalwandungen durch den vorgenannten Energieeintrag oder andere Mittel obendrein so verfestigt worden sind, dass sie während der Lagerung und des Transportes von der Klebebandfabrik zum Klebebandkunden nicht zusammenfließen.

Selbst wenn ein solcher lokaler Energieeintrag, insbesondere eine Laserbestrahlung, auf die Kanalwandungen deren Fließen nicht völlig unterbinden würde, so eignet er sich dennoch dafür, die Kanalwände in der Klebmasse vorzuvernetzen, und so ein Zusammenfließen der Kanäle zusätzlich zu verlangsamen. Dies ermöglicht die Verwendung von Klebmassen mit besonders hohem Tack für die Ausbildung erfindungsgemäßer Klebschichten.

Weiterhin ermöglicht die Erfindung eine Verwendung der oben beschriebenen Klebschicht mit Kanälen und expandierter Klebmasse zur Herstellung einer blasenfreien Verklebung. Hierfür wird die Klebmasse unmittelbar auf die Oberfläche eines Substrats aufgebracht oder aber auf ein Flächengebilde, insbesondere ein flexibles Flächengebilde wie etwa eine Klebefolie, ein Klebeband oder ein Klebeetikett, die in üblicher Weise ausgebildet sein können. Insbesondere ermöglicht die Erfindung die Verwendung der Klebmasse zur Herstellung eines derartigen Flächengebildes für eine blasenfreie Verklebung.

Das erfindungsgemäß bereitgestellte Flächengebilde für eine blasenfreie Verklebung weist einen Träger und/oder eine sonstige Funktionsschicht und eine mit dem Träger oder der sonstigen Funktionsschicht verbundene Klebschicht auf. Im Folgenden wird unter dem Begriff der Funktionsschicht auch der Träger verstanden. Die Verbindung der beiden Schichten (Funktionsschicht und Klebschicht) kann über beliebige Verbindungsverfahren erzielt werden, am einfachsten durch ein Verkleben der Klebschicht auf der Funktionsschicht mit derjenigen Seite der Klebschicht, die der Klebfläche entgegengesetzt ist, oder aber durch ein gezieltes chemisches Verknüpfen der Funktionsschicht mit der Klebschicht, wofür die Funktionsschicht und/oder die Klebschicht durch Modifikation der entsprechenden Oberfläche chemisch angepasst sein können. Solche Flächengebilde können verschieden ausgestaltet sein, beispielsweise als Band, Etikett oder Folie.

Ein derartiger Träger kann aus üblichen Materialien bestehen, beispielsweise aus Polymeren wie Polyester, Polypropylen, Polyethylen, Polyamid oder Polyvinylchlorid, aus Geweben, Gewirken, Gelegen, Vliesen, Papier, Schaumstoffen und dergleichen, wie auch aus Laminaten dieser Materialien. Ein solcher Träger kann als permanent mit der Klebschicht verbundener Träger ausgeführt sein, beispielsweise für herkömmliche Klebefolien und -bänder, oder aber aus einem temporären Träger bestehen, der im Gebrauch lediglich eine bestimmte Zeit mit der Klebschicht verbunden ist, beispielsweise für das Auftragen des klebenden Flächengebildes auf ein Substrat, und danach wieder entfernt wird. Beispiele für derartige temporäre Träger sind Liner, insbesondere Prozessliner, wie sie in der Klebetechnik üblich sind, etwa silikonisierte Trennpapiere.

Eine Funktionsschicht kann darüber hinaus auch eine weitere Klebschicht aufweisen, die ebenfalls die zuvor beschriebene Klebmasse enthält, so dass sich also ein beidseitig klebriges Flächengebilde ergibt. Alternativ kann diese zweite Klebschicht auch gegenüber der ersten Klebschicht abgewandelte Klebeigenschaften aufweisen, um beispielsweise auf einem anderen, zweiten Substrat eine andere Haftung zu erzielen. Derartige Flächengebilde können so beim Kunden eingesetzt werden oder als Transferklebebänder Verwendung finden. Selbstverständlich kann eine Funktionsschicht auch mehrere einzelne solcher Funktionselemente aufweisen, etwa einen permanenten Träger, auf dem eine zweite Klebschicht aufgetragen ist, die wiederum von einem temporären Träger abgedeckt wird. Übliche Bestandteile solcher Funktionsschichten stellen etwa eine oder mehrere Lagen an Folien, Geweben, Vliesen, Schaumstoffen, Depotstrukturen für bestimmte Zusatz- oder Wirkstoffe, Antihaftsysteme dar.

In bevorzugter Ausgestaltung kann die Klebschicht auf der der Funktionsschicht abgewandten Seite, also an ihrer Oberseite, vorübergehend mit einem Liner mit einer im Wesentlichen glatten Oberfläche abgedeckt werden, d. h. eine Anpassung des Liners an die Kanalstruktur zu deren Stützung vor dem Gebrauch, um ein Zusammenfließen zu verhindern, ist nicht erforderlich. Dies ist insbesondere dann der Fall, wenn die Kanalwände vorvernetzt sind.

Eine Abdeckung mit einem glatten Liner ist insbesondere bei einseitig klebenden Klebebändern vorteilhaft, da so die Funktionsschicht des Flächengebildes vielfältig genutzt werden kann. Die Funktionsschicht kann einerseits als Träger einer ersten Klebschicht und auf ihrer Rückseite als Liner für eine zweite Klebschicht ausgebildet sein.

Die Ausbildung der Funktionsschicht als Liner kann durch eine geeignete anti-adhäsive Beschichtung, wie zum Beispiel eine Beschichtung mit Silikon-Kautschuk, erfolgen. Ein derartiges Flächengebilde kann insofern ohne zusätzlichen Liner als Rolle aufgewickelt werden, da die Funktionsschicht des Flächengebildes dessen Funktion übernimmt. Ein solches Flächengebilde kann beispielsweise verwendet werden für einseitig klebende Klebebänder, wie zum Beispiel so genannte Blackout-Tapes (BOT) zur Kaschierung von Teilen von Automobilkarosserien, insbesondere der B-Säule.

Als Alternative zu der Abdeckung mit einem glatten Liner kann die Klebschicht mit einem Liner abgedeckt werden, der als Formnegativ zur Oberflächenstruktur der Klebschicht ausgebildet ist, d. h. eine Struktur aufweist, die in die Kanäle eingreift und so die Kanalstruktur bis zum Entfernen des Liners stützt und so konserviert. Ein derartiges Flächengebilde eignet sich besonders für zweiseitig klebende Klebebänder, beispielsweise bei der Anwendung für Druckklischee-Verklebungen.

Von besonderer Bedeutung ist ferner, dass die Klebschicht aufgrund der Expansion der Klebmasse eine erhöhte Kompressibilität in der z-Richtung, also senkrecht zur Klebschicht, aufweist. Dadurch ist die bei manchen Anwendungen, wie z.B. bei Druckklischee-Verklebungen, erforderliche zusätzliche Polsterschicht, die in der Regel aus Schaumstoff besteht, nicht erforderlich. Man kann daher die Dicke der Schaumstoffschicht um den Anteil reduzieren, den die Klebmasse erhöht wurde oder gegebenenfalls die Polsterschicht komplett ersetzen. Dieser Zusatznutzen bringt nicht nur eine Kostenersparnis, die den Mehraufwand für den Mikroballon-Eintrag kompensieren kann, sondern erleichtert zudem die Einhaltung des bisherigen Maßregimes in den Druckereibetrieben. Das erfindungsgemäße Flächengebilde eignet sich so insbesondere zur Verwendung bei der Verklebung von Druckplatten, ganz besonders nämlich zur Klischeemontage.

Die Erfindung stellt auch ein Verfahren zur Herstellung eines erfindungsgemäßen Flächengebildes für eine blasenfreie Verklebung bereit. Bei diesem Verfahren wird die Klebmasse als Klebschicht auf eine Funktionsschicht aufgebracht und mindestens ein Kanal in die Klebmasse oberflächig eingebracht. Erfindungsgemäß wird die Klebmasse zudem expandiert, wobei die Expansion der Klebmasse vor dem Aufbringen der Klebmasse auf die Funktionsschich oder nach diesem Aufbringen aber erfindungsgemäß vor dem Einbringen der Kanäle. Weil sich beim an den Schluss gestellten Expandieren der Querschnitt der zuvor eingeprägten Kanäle mehr oder weniger -je nach Expansionsgrad- verändern kann, sollten a) Maßnahmen ergriffen werden, die solche Veränderungen eindämmen und/oder b) Bemessungen gewählt werden, die solche nachträglichen Veränderungen bereits berücksichtigen.

Die bevorzugte Maßnahme nach a) ist, das Prägewerkzeug, das formschlüssig in die geprägte Klebschicht eingreift, dort bis zum Abschluss der Expansion zu belassen. Die bevorzugte Maßnahme nach b) ist, die zunächst geprägten Kanäle mit größerer Weite und größerem Erweiterungswinkel zu bemessen, als sich diese dann nach der Expansion einstellen.

Die Expansion der Klebmasse kann auf verschiedene Art und Weise erfolgen. Insbesondere eignet sich hierfür das zuvor beschriebene Aufschäumen der Klebmasse beispielsweise durch das Einleiten eines Blähgases oder durch das Einmischen einer Blähgase enthaltenden Substanz, wobei diese Substanz anschließend ein Blähgas abgibt. Die Abgabe des Blähgases kann bereits beim Einmischen dieser Substanz in die Klebmasse oder nach einem geeigneten Auslöseschritt, wie einem Energieeintrag erfolgen. Ferner kann die Expansion der Klebmasse auch durch Einmischen chemisch reaktiver Stoffe erfolgen, wobei durch eine chemische Reaktion eine Volumenvergrößerung erzielt wird. Die chemische Reaktion kann unmittelbar durch bzw. beim Einmischen in die Klebmasse erfolgen oder ebenfalls durch einen Auslöseschritt aktiviert werden.

In besonders bevorzugter Ausgestaltung des Verfahrens erfolgt die Expansion der Klebmasse durch das Einmischen von Mikroballons und das anschließende Auslösen der Expansion beispielsweise durch einen Energieeintrag wie eine Temperaturerhöhung.

Bei der Expansion der Klebmasse mittels Mikroballons werden diese vorzugsweise bereits vor dem Aufbringen der Klebmasse als Klebschicht auf die Funktionsschicht in die Klebmasse eingemischt. Dabei wird ausgenutzt, dass die Mikroballons in ihrem noch nicht expandierten Zustand sowohl aufgrund ihrer wesentlich kleineren Angriffsfläche als auch aufgrund der gegenüber dem expandierten Zustand größeren Wanddicke mechanisch so beständig sind, dass die allermeisten Mikroballons die beim Mischen und Aufstreichen oder Aufkalandrieren auftretenden Scherlasten unbeschadet überstehen.

Für eine gute visuelle Qualität der Verklebung sowie für eine einheitliche Höhe der Klebschicht ist es besonders vorteilhaft, wenn die Klebmasse homogen expandiert wird. Dies wird vorzugsweise dadurch erreicht, dass das Blähgas, die Blähgas enthaltenden Stoffe, die Mikroballons und/oder die chemisch reaktiven Stoffe im Wesentlichen homogen in der Klebmasse verteilt werden, beispielsweise durch einen entsprechenden Mischvorgang.

Erfindungsgemäß werden die Mikroballons sogar erst nach dem Einbringen der Kanäle in die Klebmasse expandiert, um eine Beschädigung der Mikroballons beim Einbringen der Kanäle soweit wie möglich zu vermeiden.

Zudem kann vorgesehen werden, dass eine zweite, möglichst dünne Klebschicht, die keine expandierbare bzw. expandierte Klebmasse enthält, auf die erste Klebschicht noch vor der Einbringung der Kanäle aufgetragen wird. Dadurch wird die "kleinste Überdeckung". Also der Abstand zwischen der peripherienächsten Pore und der Klebschichtperipherie, vergrößert, unter Umständen überhaupt erst Porenbildung an der Oberfläche vermieden. Die Kanaleinbringung erfolgt dann in die beiden übereinander angeordneten Klebschichten gleichermaßen.

Alternativ kann aber auch vorgesehen sein, dass die Klebmasse oberflächlich nicht expandiert wird, dass also lokal keine Aktivierung der Expansion erfolgt.

Als Verfahrensschritt zur Einbringung der Kanäle in die Klebmasse eignet sich besonders das Einprägen. Dies kann beispielsweise derart erfolgen, dass ein strukturierter Liner auf die Klebmasse aufgebracht wird, so dass die Struktur des Liners als Kanäle in die Klebmasse eingeprägt wird. Der strukturierte Liner ist ein Formnegativ der Oberflächenstruktur der Klebschicht dar. Alternativ oder zusätzlich können die Kanäle auch durch einen lokalen Energieeintrag, wie z.B. durch eine lokale Laserbestrahlung, in die Klebmasse eingebracht beziehungsweise stabilisiert werden.

Bei dem Verfahren zur Herstellung eines blasenfrei verklebenden Flächengebildes ist es besonders vorteilhaft, wenn die Kanalwände nach Einbringung in die Klebmasse durch einen lokalen Energieeintrag vorvernetzt werden. Dadurch wird die Beständigkeit der Kanalwände zusätzlich erhöht, so dass die Kanäle auch bei einer längeren Lagerung des Flächengebildes erhalten bleiben und ein Zusammenfließen unterbleibt. Die Vorvernetzung kann insbesondere durch eine Laserbestrahlung erzielt werden.

Weitere Einzelheiten, Merkmale, Ziele und Vorteile der vorliegenden Erfindung werden nachfolgend anhand einer Zeichnung bevorzugter Ausführungsbeispiele näher erläutert. In der Zeichnung zeigt
- Fig. 1: ein Vorprodukt zur Herstellung eines blasenfrei verklebenden Flächengebildes, nämlich nach Klebmassenauftrag und Kanaleinprägung, aber vor der Expansion,
- Fig. 2: das Flächengebilde aus Fig. 1 nach der Expansion,
- Fig. 3: als weiteres Ausführungsbeispiel ein anderes Vorprodukt zur Herstellung eines blasenfrei verklebenden Flächengebildes vor der Expansion,
- Fig. 4: das Flächengebilde aus Fig. 3 nach der Expansion,
- Fig.5: vier schematische Draufsichten auf eine Klebschicht mit verschiedenen Ausbildungen mehrerer einander nicht kreuzender Kanäle,
- Fig.6: drei schematische Draufsichten auf eine Klebschicht mit verschiedenen Ausbildungen mehrerer einander kreuzender Kanäle,
- Fig.7: ein anderes, beidseitiges klebriges Ausführungsbeispiel eines blasenfrei verklebenden Flächengebildes.

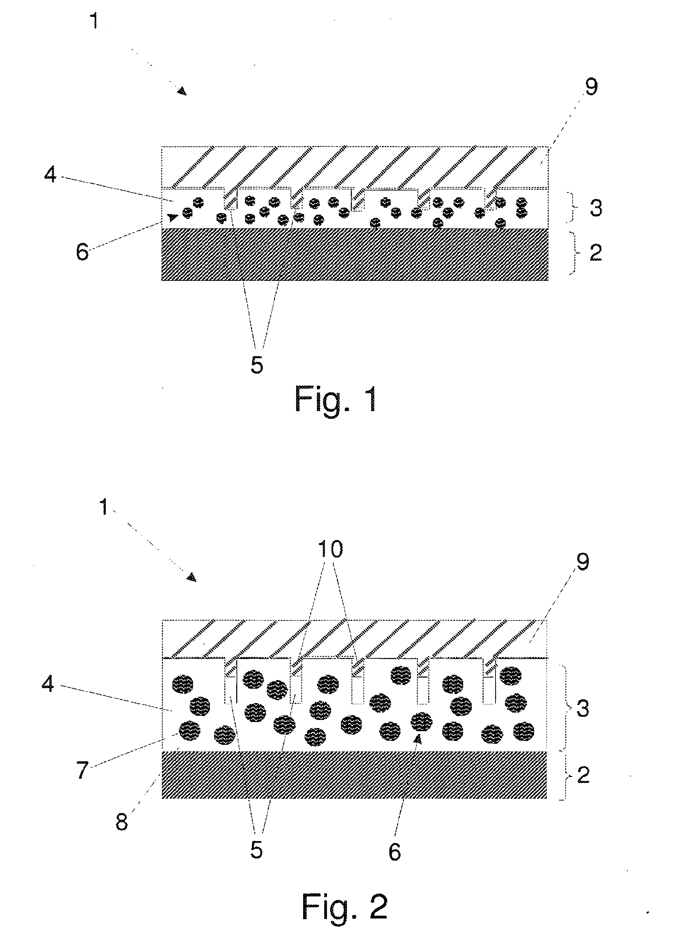

Fig. 1 zeigt ein Flächengebilde 1 mit einer Funktionsschicht 2 und einer mit der Funktionsschicht 2 verbundenen Klebschicht 3. Die Funktionsschicht 2 ist hier als Träger der Klebschicht 3 ausgeführt. Die Klebschicht 3 enthält eine Klebmasse 4. In die Klebschicht 3 sind mehrere parallel zueinander verlaufende Kanäle 5 eingebracht. Fig. 1 zeigt das Vorprodukt für ein blasenfrei verklebendes Flächengebilde 1 vor und Fig. 2 selbiges Flächengebilde 1 nach der Expansion der Klebmasse 4.

Die in Fig. 2 gezeigte Expansion der Klebmasse 4 ist dauerhaft, d. h. diese bleibt auch nach der Verklebung mit einem Substrat bestehen. Durch die Expansion der Klebmasse 4 wird eine gegenüber einer nicht expandierten Klebmasse erhöhte Kompressibilität erzielt. Dadurch kann auf die für bestimmte Anwendungen erforderliche Polsterschicht in dem Flächengebilde 1 verzichtet werden.

Wie bevorzugt ist bei dem Flächengebilde gemäß Fig.2 die Blähung der Klebmasse 4 durch Mikroballons 6 bewirkt. Die Mikroballons 6 weisen eine Hülle 7 und innerhalb der Hülle 7 eine Substanz 8 auf, die nach einem Auslöseschritt eine Volumenvergrößerung erfährt. Die Hülle 7 ist als thermoplastische Polymerhülle beispielsweise aus Polyacrylnitril ausgebildet. Bei der Substanz 8 handelt es sich hier um Isobutan. Durch eine Temperaturerhöhung als Auslöseschritt erweicht die thermoplastische Polymerhülle 7 und die Substanz 8 dehnt sich aus. Es kommt zu einer erheblichen Volumensteigerung der Mikroballons 6 und somit zur Expansion der Klebmasse 4 (Fig. 2).

Wie Fig. 2 schematisch zeigt, ermöglicht die Expansion schon bei üblicher Klebstoffmenge pro Quadratmeter eine relativ dicke Klebschicht 4 und schafft somit die grundsätzliche Voraussetzung für tiefe Kanäle 5 in der Klebschicht.

In Fig. 1, 2 ist gezeigt, dass die Klebschicht 3 mit einem Liner 9 abgedeckt ist. Der Liner 9 weist Vorsprünge 10 auf, die in die Kanäle 5 in der Klebmasse 4 hineinragen. Die Kanäle 5 sind in die Klebmasse 4 mittels des Liners 9 eingebracht worden, indem der Liner 9 mit den Vorsprüngen 10 auf die Klebmasse 4 aufgelegt und die Kanäle 5 somit durch die Vorsprünge 10 des Liners 9 in die Klebmasse 4 eingeprägt wurden. Anschließend wurde die Klebmasse 4 expandiert, wodurch die Kanaltiefe der Klebmasse 4 vergrößert wurde, wie auch aus der Zusammenschau von Fig. 1 und Fig. 2 ersichtlich ist.

Als Alternative oder Ergänzung zum Einprägen der Kanäle 5 in die Klebmasse 4 bietet sich eine lokale Bestrahlung der Klebmasse 4 mittels eines Lasers an. Die Kanäle 5 werden dann in der Klebmasse 4 durch die Laserbestrahlung erzeugt beziehungsweise stabilisiert.

Die Tiefe der Kanäle 5 ist nach der Expansion der Klebmasse 4 größer als 45 µm, vorzugsweise größer als etwa 60 µm, weiter vorzugsweise größer als etwa 70 µm. Hier und ganz bevorzugt beträgt die Tiefe der Kanäle 5 etwa 90 µm. Die Schichtdicke der Klebschicht beträgt hier etwa 130 µm. Als Maximalgröße sollte die Tiefe der Kanäle 5 nicht mehr als etwa 140 µm betragen.

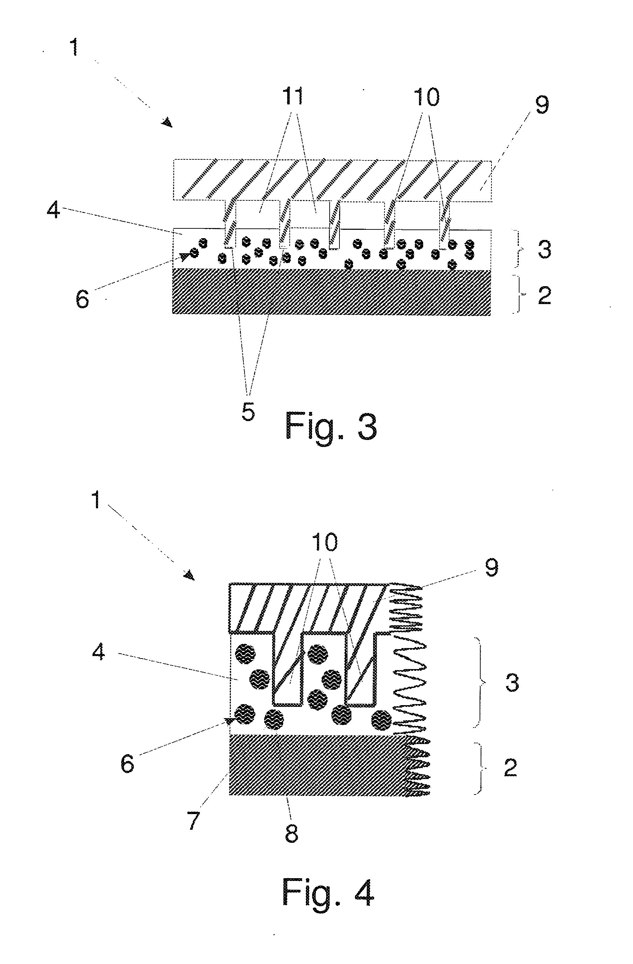

Fig.2 zeigt ferner, dass die Dicke der Klebschicht hier etwa so groß ist wie die Tiefe der Kanäle 5, bei der Ausführungsform gemäß Fig. 4 hingegen nur etwa 30 % größer..

Die Fig. 4 zeig eine weitere Ausgestaltung eines erfindungsgemäßen blasenfrei verklebenden Flächengebildes 1 und Fig. 3 das dazugehörige Vorprodukt. Diese Ausgestaltung unterscheidet sich von der Ausgestaltung gemäß Fig. 1, 2 u. a. dadurch, dass der Liner 9 gegenüber dem in Fig. 1, 2 gezeigten Liner längere Vorsprünge 10 aufweist. Diese Vorsprünge 10 sind so lang ausgebildet, dass sie die Kanäle 5 auch nach der Expansion der Klebmasse 4 nahezu vollständig ausfüllen. Sie stellen somit sicher, dass die Kanalstruktur bei der Expansion der Klebmasse 4 beibehalten wird. Dafür muss allerdings in Kauf genommen werden, dass die Zuführung dieses Liners genau der Höhe nach gesteuert oder geregelt wird, damit zunächst -also vor dem Expandieren- wirklich Hohlräume 11 verbleiben und die langen Vorsprünge 10 nicht die Klebschicht 3 durchstechen.

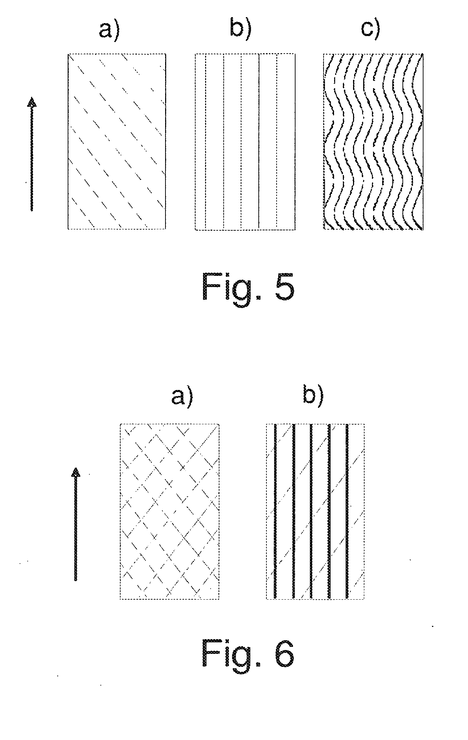

Fig. 5 und Fig. 6 zeigen im Ausschnitt Draufsichten auf Klebschichten mit verschiedenen Ausbildungen von Kanälen 5. Die Flächenausrichtung der Klebschichten verläuft jeweils in der Darstellungsebene; die Produktionsrichtung ist links mit einem Pfeil angegeben. Allen Anordnungen ist zu entnehmen, dass die Klebschicht jeweils mehrere Kanäle 5 aufweist. Dies ist vorteilhaft, um einen möglichst kurzen Weg einer Fluidblase zu einem Kanal 5 zu gewährleisten, um das Ausstreichen von Fluidblasen so einfach wie möglich zu gestalten. Allerdings dürfen auch nicht zu viele Kanäle 5 vorgesehen sein, um die Klebkraft nicht zu stark herabzusetzen.

In Fig. 5 sind Anordnungen dargestellt, in denen die Kanäle 5 sich untereinander nicht kreuzen. Sie sind jeweils im gleichmäßigen Abstand zueinander parallel angeordnet. In Fig. 5a verlaufen die Kanäle 5 in einer Richtung schräg zur Produktionsrichtung, in Fig. 5b verlaufen die Kanäle 5 in Produktionsrichtung und in Fig. 5c verlaufen die Fäden wellenförmig längs zur Produktionsrichtung.

In Fig. 6 sind Anordnungen dargestellt, in denen zwei Scharen von Kanälen 5 vorgesehen sind, die einander kreuzen. Innerhalb jeder Schar verlaufen die Kanäle 5 jeweils im Wesentlichen im gleichen Abstand. In Fig. 6a verlaufen die Kanäle 5 der beiden Scharen schräg zur Produktionsrichtung und in Fig. 6b verlaufen die Kanäle der ersten Schar in Produktionsrichtung und die Kanäle der zweiten Schar schräg dazu. Während in Fig. 6a und 6b die Kanäle der beiden Scharen jeweils denselben Abstand zwischen zwei Kanälen 5 aufweisen, sind in Fig. 6b die Abstände der Kanäle 5 in den beiden Scharen unterschiedlich.

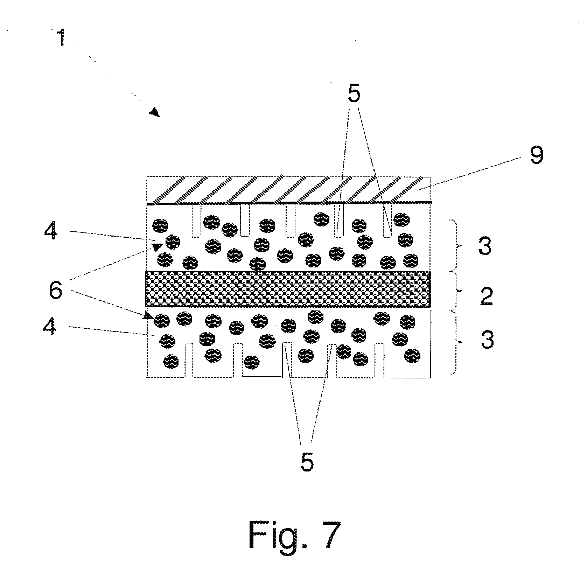

Fig. 7 zeigt ein weiteres blasenfrei verklebendes Flächengebilde 1, bei dem mit der Funktionsschicht 2 auf beiden Seiten jeweils eine Klebschicht 3 verbunden ist. Beide Klebschichten 3 sind gemäß der obigen Beschreibung ausgeführt. Ferner ist gezeigt, dass einer der Klebschichten 3 mit einem Liner 9 abgedeckt ist, der zur Klebmasse 4 hin eine im Wesentlichen glatte Oberfläche aufweist. Somit dient der Liner 9 hier nicht dazu, die Kanalstruktur zu stützen, sondern lediglich zur Abdeckung der Klebschicht 3. Dies ist insbesondere dann möglich, wenn die Seitenflanken der Kanäle 5 vorvernetzt sind.

## Patentansprüche

1. Klebschicht für eine blasenfreie Verklebung,
wobei die Klebschicht (3) aus einer Klebmasse (4) gebildet ist und oberflächlich mindestens einen Kanal (5) aufweist,
**dadurch gekennzeichnet,**
**dass** die Klebmasse (4) eine Haftklebmasse ist, die expandiert ist, und dass alle Kanäle (5) eine Tiefe größer als 45 µm aufweisen.

2. Klebschicht nach Anspruch 1, **dadurch gekennzeichnet,**
**dass** die Klebmasse (4) aufgeschäumt ist.

3. Klebschicht nach Anspruch 2, **dadurch gekennzeichnet,**
**dass** die Klebmasse (4) Blähgas, insbesondere Kohlendioxid, Blähgase abgebende Substanzen und/oder Mikroballons (6) enthält.

4. Klebschicht nach einem der vorhergehenden Ansprüche, **dadurch gekennzeichnet,**
**dass** das spezifische Gewicht der expandierten Klebmasse (4) höchstens etwa 70 %, vorzugsweise unter 50 % des Gewichts einer nicht expandierten Klebmasse gleicher Dicke beträgt,
insbesondere, dass das spezifische Gewicht der expandierten Klebmasse (4) zwischen etwa 35 % und etwa 15 % des Gewichts einer nicht expandierten Klebmasse gleicher Dicke beträgt.

5. Klebschicht nach einem der vorhergehenden Ansprüche, **dadurch gekennzeichnet,**
**dass** die Kanalwände vorvernetzt sind.

6. Klebschicht nach einem der vorhergehenden Ansprüche, **dadurch gekennzeichnet,**
**dass** alle Kanäle (5) eine Tiefe größer als etwa 60 µm, weiter vorzugsweise größer als etwa 70 µm, insbesondere von etwa 90 µm aufweisen und/oder dass alle Kanäle (5) eine Tiefe kleiner als etwa 140 µm aufweisen.

7. Klebschicht nach einem der vorhergehenden Ansprüche, **dadurch gekennzeichnet,**
**dass** die Dicke der Klebmasse (4) etwa 10 % bis etwa 60 %, insbesondere etwa 30 % größer als die Tiefe der Kanäle (5) ist.

8. Klebschicht nach einem der vorhergehenden Ansprüche, **dadurch gekennzeichnet,**
**dass** die Klebmasse (4) eine erste Schar Kanäle (5) und eine zweite Schar Kanäle (5) aufweist, dass die Kanäle (5) der ersten Schar untereinander und die Kanäle (5) der zweiten Schar untereinander jeweils im Wesentlichen zueinander parallel orientiert sind und dass die Kanäle (5) der ersten Schar die Kanäle (5) der zweiten Schar kreuzen.

9. Verwendung einer Klebschicht (3) nach einem der vorhergehenden Ansprüche zur Herstellung einer blasenfreien Verklebung.

10. Flächengebilde für eine blasenfreie Verklebung mit
einer Funktionsschicht (2) und
einer mit der Funktionsschicht (2) verbundenen Klebschicht (3),
**dadurch gekennzeichnet,**
**dass** die Klebschicht (3) gemäß einem der Ansprüche 1 bis 8 ausgebildet ist.

11. Verwendung eines Flächengebildes gemäß Anspruch 10 zur Verklebung von Druckplatten, insbesondere zur Klischeemontage.

12. Verfahren zur Herstellung eines blasenfrei verklebenden Flächengebildes (1) nach Anspruch 10,
bei dem eine Klebmasse (4) auf eine Funktionsschicht (2) aufgebracht wird und bei dem in die so gebildete Klebschicht (3) mindestens ein Kanal (5) oberflächig eingebracht wird,
**dadurch gekennzeichnet,**
**dass** die Klebmasse (4) nach dem Einbringen der Kanäle (5) expandiert wird.

13. Verfahren nach Anspruch 12, **dadurch gekennzeichnet,**
**dass** auf die Klebschicht (3) aus expandierbarer bzw. expandierter Klebmasse (4) eine zweite Klebschicht nicht-expandierbarer bzw. nicht-expandierter Klebmasse aufgebracht wird.

14. Verfahren nach einem der Ansprüche 12 oder 13, **dadurch gekennzeichnet, dass** die Kanalwände durch einen lokalen Energieeintrag, vorzugsweise durch Laserbestrahlung, vorvernetzt werden.

## Claims

1. Adhesive layer for a bubble-free adhesive bond, the adhesive layer (3) being formed by an adhesive (4) and having superficially at least one channel (5), **characterized in that** the adhesive (4) is a pressure-sensitive adhesive which is in an expanded state, and **in that** all of the channels (5) have a depth greater than 45 µm.

2. Adhesive layer according to Claim 1, **characterized in that** the adhesive (4) is in a foamed state.

3. Adhesive layer according to Claim 2, **characterized in that** the adhesive (4) contains expanding gas, in particular carbon dioxide, substances emitting expanding gases and/or microballoons (6).

4. Adhesive layer according to one of the preceding claims, **characterized in that** the weight of unit volume of the expanded adhesive (4) is at most approximately 70%, preferably below 50%, of the weight of a non-expanded adhesive of the same thickness, in particular **in that** the weight of unit volume of the expanded adhesive (4) is between about 35% and about 15% of the weight of a non-expanded adhesive of the same thickness.

5. Adhesive layer according to one of the preceding claims, **characterized in that** the channel walls are pre-crosslinked.

6. Adhesive layer according to one of the preceding claims, **characterized in that** all of the channels (5) have a depth greater than about 60 µm, more preferably greater than about 70 µm, in particular of about 90 µm, and/or **in that** all of the channels (5) have a depth less than about 140 µm.

7. Adhesive layer according to one of the preceding claims, **characterized in that** the thickness of the adhesive (4) is about 10% to about 60%, in particular about 30%, greater than the depth of the channels (5).

8. Adhesive layer according to one of the preceding claims, **characterized in that** the adhesive (4) has a first set of channels (5) and a second set of channels (5), **in that** the channels (5) of the first set are respectively oriented substantially parallel to one another and the channels (5) of the second set are respectively oriented substantially parallel to one another and **in that** the channels (5) of the first set cross the channels (5) of the second set.

9. Use of an adhesive layer (3) according to one of the preceding claims for producing a bubble-free adhesive bond.

10. Sheet-like structure for a bubble-free adhesive bond, comprising a functional layer (2) and an adhesive layer (3) connected to the functional layer (2), **characterized in that** the adhesive layer (3) is formed according to one of Claims 1 to 8.

11. Use of a sheet-like structure according to Claim 10 for the adhesive bonding of printing plates, in particular for the mounting of printing plates.

12. Method for producing a bubble-freely bonding sheet-like structure (1) according to Claim 10, in which an adhesive (4) is applied to a functional layer (2) and in which at least one channel (5) is introduced superficially into the adhesive layer (3) thus formed, **characterized in that** the adhesive (4) is expanded after the introduction of the channels (5).

13. Method according to Claim 12, **characterized in that** a second adhesive layer of non-expandable or non-expanded adhesive is applied to the adhesive layer (3) of expandable or expanded adhesive (4).

14. Method according to either of Claims 12 and 13, **characterized in that** the channel walls are pre-crosslinked by a local input of energy, preferably by laser irradiation.

## Revendications

1. Couche adhésive pour un collage exempt de bulles, la couche adhésive (3) étant formée à partir d'une masse adhésive (4) et présentant en surface au moins un canal (5), **caractérisée en ce que** la masse adhésive (4) est une masse autoadhésive qui est expansée et **en ce que** tous les canaux (5) présentent une profondeur supérieure à 45 µm.

2. Couche adhésive selon la revendication 1, **caractérisée en ce que** la masse adhésive (4) est moussée.

3. Couche adhésive selon la revendication 2, **caractérisée en ce que** la masse adhésive (4) contient un gaz gonflant, en particulier du dioxyde de carbone, des substances libérant des gaz gonflants et/ou des microballons (6).

4. Couche adhésive selon l'une quelconque des revendications précédentes, **caractérisée en ce que** le poids spécifique de la mase adhésive expansée (4) représente au plus environ 70%, de préférence moins de 50% du poids d'une masse adhésive non expansée d'épaisseur identique, en particulier **en ce que** le poids spécifique de la masse adhésive expansée (4) représente entre environ 35% et environ 15% du poids d'une masse adhésive non expansée d'épaisseur identique.

5. Couche adhésive selon l'une quelconque des revendications précédentes, **caractérisée en ce que** les parois des canaux sont préréticulées.

6. Couche adhésive selon l'une quelconque des revendications précédentes, **caractérisée en ce que** tous les canaux (5) présentent une profondeur supérieure à environ 60 µm, plus préférablement supérieure à environ 70 µm, en particulier d'environ 90 µm et/ou **en ce que** tous les canaux (5) présentent une profondeur inférieure à environ 140 µm.

7. Couche adhésive selon l'une quelconque des revendications précédentes, **caractérisée en ce que** l'épaisseur de la masse adhésive (4) est supérieure d'environ 10% à environ 60%, en particulier d'environ 30% à la profondeur des canaux (5).

8. Couche adhésive selon l'une quelconque des revendications précédentes, **caractérisée en ce que** la masse adhésive (4) présente une première série de canaux (5) et une deuxième série de canaux (5), **en ce que** les canaux (5) de la première série et les canaux (5) de la deuxième série sont orientés de manière sensiblement parallèle les uns aux autres et **en ce que** les canaux (5) de la première série croisent les canaux (5) de la deuxième série.

9. Utilisation d'une couche adhésive (3) selon l'une quelconque des revendications précédentes pour la réalisation d'un collage sans bulles.

10. Structures planes destinées à un collage sans bulles présentant
une couche fonctionnelle (2) et
une couche adhésive (3) reliée à la couche fonctionnelle (2), **caractérisées en ce que** la couche adhésive (3) est réalisée selon l'une quelconque des revendications 1 à 8.

11. Utilisation d'une structure plane selon la revendication 10 pour le collage de plaques d'imprimerie, en particulier pour le montage de clichés.

12. Procédé pour la fabrication d'une structure plane (1) à coller sans bulles selon la revendication 10,
dans lequel une masse adhésive (4) est appliquée sur une couche fonctionnelle (2) et dans lequel au moins un canal (5) est introduit dans la surface de la couche adhésive (3) ainsi formée, **caractérisé en ce que** la masse adhésive (4) est expansée après l'introduction des canaux (5).

13. Procédé selon la revendication 12, **caractérisé en ce qu'**on applique, sur la couche adhésive (3) en masse adhésive expansible ou, selon le cas, expansée (4) une deuxième couche adhésive non expansible ou, selon le cas, non expansée.

14. Procédé selon l'une quelconque des revendications 12 ou 13, **caractérisé en ce que** les parois des canaux sont préréticulées par une introduction d'énergie locale, de préférence par une irradiation au laser.
